# EUROPEAN PATENT APPLICATION

(11) **EP 4 629 569 A1**
(43) Date of publication of application: **08.10.2025**
(21) Application number: 22966715.9
(22) Date of filing: 28.11.2022
(51) Int. Cl.: H04L 27/00

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: XU, Yang, Dongguan, Guangdong 523860 (CN); CHEN, Jingran, Dongguan, Guangdong 523860 (CN)
(74) Representative: RGTH
(86) International application number: PCT/CN2022/134775
(87) International publication number: WO 2024/113111

(57) **Abstract**

Embodiments of the present disclosure provide a communication method and a device. The communication method includes: receiving, by a first terminal device, a first transmission rate parameter, where the first transmission rate parameter is used for measuring a transmission rate of one or more second terminal devices in a group served by the first terminal device. According to the embodiments of the present disclosure, a transmission rate (or bandwidth) of a remote UE in a group can be measured.

## Description

### TECHNICAL FIELD

The present disclosure relates to the field of communications, and in particular, to a communication method and a communication device.

### BACKGROUND

Currently, many group-related traffics need to be carried out by mobilizing a plurality of terminals. For example, a plurality of remote UEs establish a communication connection with a relay UE. The plurality of remote UEs form a group. The relay UE serves the group and interacts with the plurality of remote UEs in the group to transmit data, respectively. It is necessary to measure transmission rates (or bandwidths) of the remote UEs in the group.

### SUMMARY

Embodiments of the present disclosure provide a communication method and a communication device, which can measure transmission rates (or bandwidths) of remote UEs in a group.

The embodiments of the present disclosure provide a communication method, including:
receiving, by a first terminal device, a first transmission rate parameter, where the first transmission rate parameter is used for measuring transmission rates of one or more second terminal devices in a group served by the first terminal device.

The embodiments of the present disclosure provide a communication method, including:
receiving, by a second terminal device, a sidelink establishment response from a first terminal device, where the sidelink establishment response carries a first transmission rate parameter, and the first transmission rate parameter is used for measuring transmission rates of one or more second terminal devices in a group served by the first terminal device.

The embodiments of the present disclosure provide a communication method, including:
transmitting, by a first network element, a first transmission rate parameter to a first terminal device, where the first transmission rate parameter is used for measuring transmission rates of one or more second terminal devices in a group served by the first terminal device.

The embodiments of the present disclosure provide a first terminal device, including:
a first receiving module, configured to receive a first transmission rate parameter, where the first transmission rate parameter is used for measuring transmission rates of one or more second terminal devices in a group served by the first terminal device.

The embodiments of the present disclosure provide a second terminal device, including:
a third receiving module, configured to receive a sidelink establishment response from a first terminal device, where the sidelink establishment response carries a first transmission rate parameter, and the first transmission rate parameter is used for measuring transmission rates of one or more second terminal devices in a group served by the first terminal device.

The embodiments of the present disclosure provide a first network element, including:
a fourth transmitting module, configured to transmit a first transmission rate parameter to a first terminal device, where the first transmission rate parameter is used for measuring transmission rates of one or more second terminal devices in a group served by the first terminal device.

In the embodiments of the present disclosure, a first terminal device receives a first transmission rate parameter, and can measure a transmission rate of a second terminal device in a group served by the first terminal device according to the first transmission rate parameter, thereby realizing measurement of transmission rates (or bandwidths) of one or more remote UEs in the group.

### BRIEF DESCRIPTION OF THE DRAWINGS

FIG. 1 is a schematic diagram of an application scenario of the embodiments of the present disclosure.
FIG. 2 is a schematic diagram of an application scenario of a communication method in accordance with the embodiments of the present disclosure.
FIG. 3 is a schematic flowchart of a communication method 300 in accordance with the embodiments of the present disclosure.
FIG. 4 is an implementation flowchart of embodiment 1 of the present disclosure.
FIG. 5 is an implementation flowchart of embodiment 2 of the present disclosure.
FIG. 6 is an implementation flowchart of embodiment 3 of the present disclosure.
FIG. 7 is an implementation flowchart of embodiment 4 of the present disclosure.
FIG. 8 is a schematic flowchart of a communication method 800 in accordance with the embodiments of the present disclosure.
FIG. 9 is a schematic flowchart of a communication method 900 in accordance with the embodiments of the present disclosure.
FIG. 10 is a structural schematic diagram of a first terminal device 1000 in accordance with the embodiments of the present disclosure.
FIG. 11 is a structural schematic diagram of a first terminal device 1100 in accordance with the embodiments of the present disclosure.
FIG. 12 is a structural schematic diagram of a second terminal device 1200 in accordance with the embodiments of the present disclosure.
FIG. 13 is a structural schematic diagram of a second terminal device 1300 in accordance with the embodiments of the present disclosure.
FIG. 14 is a structural schematic diagram of a first network element 1400 in accordance with the embodiments of the present disclosure.
FIG. 15 is a structural schematic diagram of a first network element 1500 in accordance with the embodiments of the present disclosure.
FIG. 16 is a schematic structural diagram of a communication device 1600 in accordance with the embodiments of the present disclosure.
FIG. 17 is a schematic structural diagram of a chip 1700 in accordance with the embodiments of the present disclosure.

### DETAILED DESCRIPTION

Technical solutions in the embodiments of the present disclosure will be described below with reference to the drawings in the embodiments of the present disclosure.

It should be noted that the terms "first", "second", etc., in the specification, claims and the above drawings in the embodiments of the present disclosure are used to distinguish similar objects, and are not necessarily used to describe a specific order or sequence. The objects described with the described "first" and "second" at the same time may be the same or different.

The technical solutions in the embodiments of the present disclosure may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial communication networks (Non-Terrestrial Networks, NTN) system, a universal mobile telecommunications system (UMTS), wireless local area networks (WLAN), wireless fidelity (WiFi), a 5th-generation (5G) communication system, or other communication systems, etc.

Generally speaking, traditional communication systems support a limited number of connections, which is also easy to implement. However, with the development of the communication technology, mobile communication systems will not only support traditional communications, but also support, for example, device to device (D2D) communication, machine to machine (M2M) communication, machine type communication (MTC), vehicle to vehicle (V2V) communication, or vehicle to everything (V2X) communication, etc. The embodiments of the present disclosure may be applied to these communication systems as well.

In an implementation, the communication system in the embodiments of the present disclosure may be applied to a carrier aggregation (CA) scenario, a dual connectivity (DC) scenario, and may also be applied to a standalone (SA) network deployment scenario.

In an implementation, the communication system in the embodiments of the present disclosure may be applied to an unlicensed spectrum, where the unlicensed spectrum may also be considered as a shared spectrum. Alternatively, the communication system in the embodiments of the present disclosure may be applied to a licensed spectrum, where the licensed spectrum may be considered as an unshared spectrum.

In the embodiments of the present disclosure, each embodiment is described in conjunction with a network device and a terminal device, where the terminal device may be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

The terminal device may be a station (STAION, ST) in the WLAN, or may be a cellular phone, a cordless phone, a session initiation protocol (Session Initiation Protocol, SIP) phone, a wireless local loop (Wireless Local Loop, WLL) station, a personal digital processing (Personal Digital Assistant, PDA) device, a handheld device with a wireless communication function, a computing device or other processing devices connected to a wireless modem, an in-vehicle device, a wearable device, a terminal device in a next generation communication system (e.g., an NR network), a terminal device in a future evolved public land mobile network (Public Land Mobile Network, PLMN) network, or the like.

In the embodiments of the present disclosure, the terminal device may be deployed on land, including indoor or outdoor, handheld, wearable, or in-vehicle; the terminal device may also be deployed on water (e.g., on a steamship, etc.); the terminal device may also be deployed in air (e.g., on an airplane, on a balloon, or on a satellite, etc.).

In the embodiments of the present disclosure, the terminal device may be a mobile phone, a pad, a computer with a wireless transceiver function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, or a wireless terminal device in smart home, or the like.

As an example but not a limitation, in the embodiments of the present disclosure, the terminal device may also be a wearable device. The wearable device may be referred to as a wearable smart device, which is a general term for wearable devices developed by performing the intellectualized design on daily wear by applying wearable technologies, such as glasses, gloves, watches, clothing and shoes, etc. The wearable device is a portable device that is worn directly on a body, or integrated into the clothes or accessories of users. The wearable device not only is a hardware device, but also implements powerful functions by software support as well as data interaction or cloud interaction. Generalized wearable smart devices include devices, that are fully functional, large in size and may implement full or partial functions without relying on smart phones, such as smart watches or smart glasses; as well as devices, that only focus on a certain type of application function and need to be used in conjunction with other devices (e.g., a smart phone), such as various smart bracelets and smart jewelry that monitor physical signs, or the like.

In the embodiments of the present disclosure, the network device may be a device for communicating with a mobile device. The network device may be an access point (AP) in WLAN, a base station (Base Transceiver Station, BTS) in GSM or CDMA, a base station (NodeB, NB) in WCDMA, an evolutional base station (Evolutional NodeB, eNB or eNodeB) in LTE, or a relay station or an access point, or a vehicle-mounted device, a wearable device, and a network device (gNB) in an NR network, or a network device in a future-evolved PLMN network, or a network device in an NTN network, or the like.

As an example but not a limitation, in the embodiments of the present disclosure, the network device may have mobile characteristics. For example, the network device may be a device which is mobile. Optionally, the network device may be a satellite, or a balloon station. For example, the satellite may be a low earth orbit (LEO) satellite, a medium earth orbit (MEO) satellite, a geostationary earth orbit (GEO) satellite, or a high elliptical orbit (HEO) satellite, etc. Optionally, the network device may also be a base station deployed on land, water, or other places.

In the embodiments of the present disclosure, the network device may provide a service for a cell, and the terminal device communicates with the network device through a transmission resource (e.g., a frequency-domain resource, or in other words, a spectrum resource) used by the cell. The cell may be a cell corresponding to the network device (e.g., a base station), and the cell may belong to a macro base station, or may belong to a base station corresponding to a small cell. The small cell here may include: a metro cell, a micro cell, a pico cell, or a femto cell, or the like. These small cells have characteristics of small coverage ranges and low transmission power, which are applicable for providing a data transmission service with high speed.

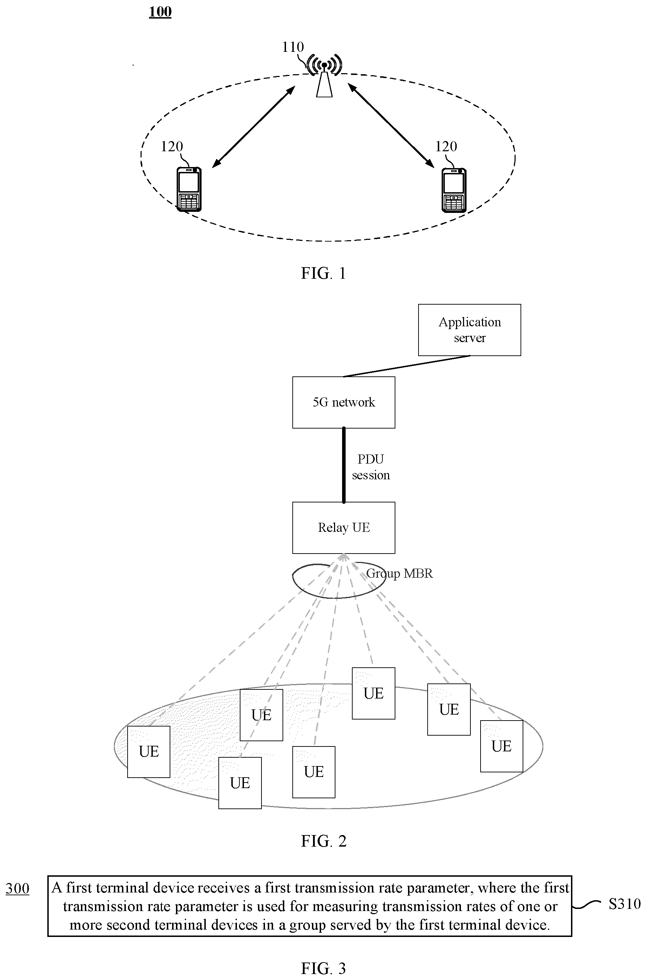

FIG. 1 exemplarily shows a communication system 100. The communication system includes a network device 110 and two terminal devices 120. In an implementation, the communication system 100 may include a plurality of network devices 110, each of which may have a coverage range in which other number of terminal devices 120 may be included, which is not limited in the embodiments of the present disclosure.

In an implementation, the communication system 100 may further include a mobility management entity (MME), an access and mobility management function (AMF), or other network entities, which is not limited in the embodiments of the present disclosure.

The network device may also include an access network device and a core network device. That is, the wireless communication system further includes a plurality of core networks for communicating with the access network device. The access network device may be an evolutional base station (evolutional node B, may be abbreviated as eNB or e-NodeB), a macro base station (also referred to as a "small base station"), a pico base station, an access point (AP), a transmission point (TP) or a new generation base station (new generation Node B, gNodeB), etc., in a long-term evolution (LTE) system, a next-generation (mobile communication system) (next radio, NR) system or a licensed auxiliary access long-term evolution (authorized auxiliary access long-term evolution, LAA-LTE) system.

It should be understood that, in the embodiments of the present disclosure, a device with a communication function in the network/system may be referred to as a communication device. Taking the communication system shown in FIG. 1 as an example, the communication device may include a network device with a communication function and a terminal device with a communication function. The network device and the terminal device may be the specific devices in the embodiments of the present disclosure, which will not be repeated here. The communication device may further include other devices in the communication system, such as a network controller, a mobility management entity, and other network entities, which are not limited in the embodiments of the present disclosure.

It should be understood that the terms "system" and "network" are often used interchangeably herein. The term "and/or" herein is only an association relationship to describe associated objects, indicating that there may be three kinds of relationships, and for example, "A and/or B" may represent three cases where: A exists alone, both A and B exist, and B exist alone. In addition, a character "/" herein generally indicates that the associated objects before and after this character are in an "or" relationship.

It should be understood that, "indicate / indicated / indicating / indication" mentioned in the embodiments of the present disclosure may mean a direct indication, an indirect indication, or may mean that there is an association relationship. For example, A indicating B may mean that A directly indicates B, and for example, B may be acquired by A; alternatively, A indicating B may mean that A indirectly indicates B, and for example, A indicates C, and B may be acquired by C; alternatively, A indicating B may mean that there is an association relationship between A and B.

In the description of the embodiments of the present disclosure, the term "correspond / corresponding / correspondence" may mean that there is a direct correspondence or an indirect correspondence between the two, or may mean that there is an association relationship between the two, or may mean a relationship of indicating and being indicated, or a relationship of configuring and being configured, or the like.

To facilitate understanding of the technical solutions in the embodiments of the present disclosure, the related technologies in the embodiments of the present disclosure are described below. The following related technologies may be, as optional solutions, arbitrarily combined with the technical solutions in the embodiments of the present disclosure, and they all belong to the protection scope of the embodiments of the present disclosure.

Currently, group-based communication methods are often used in daily traffics, such as a federated learning (FL) traffic. The group-based communication methods may include that an application server interacts with a plurality of terminals through 5GS (core network + base station) to transmit data. Due to the need of application layer scheduling, the application server may select different terminals in each round (or each time period). For example, if there are 100 terminals within the coverage of a base station, the application server will interact with 10 of the terminals as needed in each round (or each time period), so that the 10 terminals may return the trained models/results to the application server by local data, and the application server may perform further processing (such as merging and weighting the training results of the plurality of terminals). The application server may then start selecting 10 new terminals (some of which may be the same as the previous round or all of which may be different from the previous round, without limitations), and then start a new round of training and result reporting.

The federated learning traffic has many advantages, including: storing locally user data without exposure to effectively protect user privacy; sharing computing power among a plurality of nodes to accelerate the training process; and combining multi-node data sets to break down data silos; or the like. At the same time, federated learning needs to be carried out by mobilizing a plurality of terminals, which may consume communication resources. If the application server of federated learning is allowed to mobilize the wireless resources of the plurality of terminals without limitations, it may inevitably affect the normal operation of other terminals or other traffics. Therefore, an effective management and control method is necessary that can meet the federated learning to limit the bandwidth as needed and support dynamic scheduling on the plurality of terminals.

In addition to the federated learning traffic, there are other traffics based on group management. In the traffic scenario based on group management, the relay UE provides indirect network connection or sidelink connection communication services for the remote UE.

FIG. 2 is a schematic diagram of an application scenario of a communication method in accordance with the embodiments of the present disclosure. As illustrated in FIG. 2, in order to execute the group traffic, the application server may communicate with the plurality of terminals through a 5G network. In some scenarios in which the communication environment is poor or Uu interface communication resources are limited, it is necessary to use a relay UE to establish an indirect network connection between the plurality of UEs and the network. As illustrated in FIG. 2, seven terminals (remote UEs) have established indirect network connections with the network through the relay UE. Uplink data and/or downlink data may be transmitted between each remote UE and the network, through the relay UE. In addition to the group traffic scenario illustrated in FIG. 2, the embodiments of the present disclosure may also be applied to other scenarios in which the plurality of remote UEs realize communication connections through the relay UE, for example, the plurality of remote UEs establish communication connections with other terminal devices through the relay UE.

The embodiments of the present disclosure provide a communication method. FIG. 3 is a schematic flowchart of a communication method 300 in accordance with the embodiments of the present disclosure. The method may be applied to the system illustrated in FIG. 1 or FIG. 2, but is not limited thereto. The method includes at least part of the following.

S310: a first terminal device receives a first transmission rate parameter, where the first transmission rate parameter is used for measuring transmission rates of one or more second terminal devices in a group served by the first terminal device.

In some examples, the first terminal device may include a relay UE, and the second network device may include a remote UE. The group served by the relay UE includes one or more remote UEs, and each of the remote UEs establishes an indirect network connection with the network through the relay UE, or each of the remote UEs establishes a connection with other terminal devices through the relay UE.

The first transmission rate parameter may represent a bandwidth allocated to the group served by the first terminal device. After receiving the first transmission rate parameter, the first terminal device may measure the transmission rates of one or more second terminal devices in the group served by the first terminal device according to the first transmission rate parameter. For example, a sum of the transmission rates of one or more second terminal devices in the group served by the first terminal device (such as all second terminal devices in the group) is measured. Furthermore, the sum of the transmission rates of all second terminal devices may be compared with the first transmission rate parameter, to determine whether a sum of real-time transmission rates of one or more second terminal devices in the group served by the first terminal device exceeds the bandwidth limit.

The real-time transmission rate may refer to a transmission rate at a current moment or in a current time period. For example, the real-time transmission rate in the current time period is obtained by counting a total amount of data transmitted in the currently-measured time period, and dividing the total amount of data by a length of the time period. The time period may be a configured time window, such as a time window with a length of 100 ms, 500 ms, or 1000 ms, etc.

The real-time transmission rate of the second terminal device may refer to a real-time transmission rate of a data transmission through a connection corresponding to a guaranteed bit rate (GBR), or a real-time transmission rate of a data transmission through a connection corresponding to a non-guaranteed bit rate (non-GBR), or a real-time transmission rate of a data transmission through a connection corresponding to a GBR and non-GBR.

Accordingly, measuring the sum of transmission rates of the one or more second terminal devices in the group served by the first terminal device may refer to:
measuring a sum of real-time transmission rates of data transmissions performed by the one or more second terminal devices in the group through a first connection, where the first connection includes a connection corresponding to the GBR; or
measuring a sum of real-time transmission rates of data transmissions performed by the one or more second terminal devices in the group through a second connection, where the second connection includes a connection corresponding to the non-GBR; or
measuring a sum of real-time transmission rates of data transmissions performed by the one or more second terminal devices in the group through a first connection and a second connection, where the first connection includes a connection corresponding to the GBR and the second connection includes a connection corresponding to the non-GBR. Each of the second terminal devices in the group may use a connection corresponding to the GBR for a transmission, or use a connection corresponding to the non-GBR for a transmission, or use both a connection corresponding to the GBR and a connection corresponding to the non-GBR for a transmission.

The first connection or the second connection may include an indirect network connection or a sidelink connection.

The relay UE may associate the PC5 connection of each of the remote UEs (i.e., the UEs in the group served by the relay UE) with the relay UE's own PDU session, and further transmit the data received on the PC5 interface to the application server on the network side through the relay UE's PDU session, or transmit the data received by the PDU session to the corresponding remote UE through the PC5 interface.

The indirect network connection used by the remote UE may realize a certain quality of service (QoS) requirement, such as a guaranteed bit rate (GBR), a packet error rate (PER), etc. The indirect network connection may also be a connection with a non-guaranteed bit rate (non-GBR).

In some implementations, the first transmission rate parameter includes an uplink transmission rate parameter and/or a downlink transmission rate parameter; where,
the uplink transmission rate parameter is used for measuring uplink transmission rates of the one or more second terminal devices in the group served by the first terminal device;
the downlink transmission rate parameter is used for measuring a downlink transmission rates of the one or more second terminal devices in the group served by the first terminal device.

By adopting the uplink transmission rate parameter and the downlink transmission rate parameter, it may be enabled to respectively measure the uplink transmission rates and downlink transmission rates of one or more second terminal devices in the group.

In some implementations, the first transmission rate parameter includes a group maximum bit rate (Group-MBR). The group maximum bit rate may also be referred to as a group MBR. The sum of GBRs of the second terminal devices in the group served by the first terminal device may be greater than, equal to or less than the value of the Group-MBR. Taking an example in which a second terminal device (such as the remote UE) establishes an indirect network connection based on the first terminal device (such as the relay UE), in the group served by the relay UE, the sum of GBRs corresponding to the indirect network connections used by each of the remote UEs to transmit data with the application server may be greater than the value of the Group-MBR of the group. For example, if the value of the Group-MBR is 20 Mbps and the group includes 10 terminals, the total value of GBRs of the indirect network connections of the 10 terminals may be 50 Mbps or other values greater than 20 Mbps, so that the application layer has enough space to adjust the transmission rate of each of the terminals in each round and ensure it through 5GS.

In some examples, the first transmission rate parameter includes an uplink Group-MBR and a downlink Group-MBR, which are used for measuring the transmission rates of all second terminal devices in the group served by the first terminal device.

In some implementations, the first terminal device may also measure real-time transmission rates of the respective second terminal devices in the group, and compare the sum of the real-time transmission rates of the second terminal devices in the group with the group MBR.

For example, the relay UE may measure the real-time transmission rates of the respective remote UEs in the group in real time. The sum of the real-time transmission rates of all second terminal devices in the group may be recorded as a group-bit rate (Group-BR). The relay UE measures the Group-BR according to the Group-MBR, that is, the relay UE measures whether the current (or real-time) data transmission rates of all indirect network connections (including a connection corresponding to the GBR and/or a connection corresponding to the non-GBR) of the remote UEs in the group is lower than the value of the Group-MBR. In this way, even if the sum of the GBRs of the remote UEs in the group is greater than the Group-MBR of the group, the value of the Group-BR of the real-time group with data transmissions between the relay UEs in the group and the application server cannot be greater than the set value. In this way, the communication rate of the application layer traffic may be adjusted more widely with different UEs in different time periods.

In some implementations, the communication method in the embodiments of the present disclosure also includes: in a case where the sum of the real-time transmission rates of the second terminal devices in the group is greater than the Group MBR, the first terminal device controls a real-time transmission rate of a second terminal device in the group, for example, by limiting the transmission rate of the second terminal device, or adjusting the communication rate of the second terminal device in the group, etc., to control the transmission rate of the second terminal device in the group.

In some implementations, the first transmission rate parameter includes an aggregated guaranteed bit rate (aggregated GBR). The aggregate guaranteed bit rate may also be referred to as an aggregate GBR.

By using the aggregated GBR, the first terminal device may allocate GBRs to connections of the respective second terminal devices in the group, so that the sum of GBRs of the connections of the second terminal devices in the group is not greater than the aggregated GBR. The connection of the second terminal device includes a sidelink connection or an indirect network connection. For example, when the relay UE establishes indirect network connections for the one or more remote UEs, the sum of GBRs allocated to the one or more remote UEs does not exceed the amount of an aggregated GBR.

The first terminal device may negotiate with the network side on the first transmission rate parameter. For example, the first terminal device is a relay UE, and the first transmission rate parameter is negotiated during the relay UE establishing a PDU session.

Exemplarily, receiving, by the first terminal device, the first transmission rate parameter, includes:
receiving, by the first terminal device, a session establishment/modification response from a first network element, where the session establishment/modification response carries the first transmission rate parameter. The first network element may include a control plane network element, for example, including a session management function (SMF).

The session establishment/modification response may further carry at least one of:
an allowed traffic indication;
an allowed maximum number of group members; and
a time window for measuring a real-time transmission rate.

The allowed traffic indication may be used for indicating a group traffic (such as a certain FL traffic), and the allowed traffic indication may be represented by at least one of a relay service code (RSC), a parameter associated with or mapped with the RSC, an application identifier and a traffic identifier. The allowed maximum number of group members may be used for indicating the maximum number of group members allowed in the group served by the first terminal device. The time window for measuring the real-time transmission rate may be used by the first terminal device to measure the real-time transmission rate of the second terminal device. The time window is represented by a time length. If the time length is 1000ms, the first terminal device measures the real-time transmission rate of the second terminal device every 1000ms. For example, in a case where the time window is 1000ms, the first terminal device computes the real-time transmission rate of the second terminal device every 1000ms; and specifically, the real-time transmission rate of the second terminal device in the time period is obtained by counting the total amount of data transmitted by the second terminal device in the time period, and dividing the total amount of data by 1000ms.

Before the first terminal device receives the session establishment/modification response from the first network element, the first terminal device may also transmit a session establishment/modification request to the first network element, where the session establishment/modification request carries at least one of:
a first transmission rate requested by the first terminal device;
a traffic indication requested by the first terminal device; and
a requested maximum number of group members.

The traffic indication requested by the first terminal device may be used for indicating a group traffic (such as a certain FL traffic). The traffic indication requested by the first terminal device may be represented by at least one of an RSC, a parameter associated with or mapped with the RSC, an application identifier and a traffic identifier. The requested maximum number of group members by the first terminal device may be used for indicating the maximum number of group members requested by the first terminal device for the group served by the first terminal device.

The information carried in the session establishment/modification response (such as the first transmission rate parameter, the allowed traffic indication, or the allowed maximum number of group members) may be determined by the first network element, according to the information carried in the session establishment/modification request (such as the first transmission rate requested by the first terminal device, the traffic indication requested by the first terminal device, and the requested maximum number of group members), and subscription information or a policy and charging control (PCC) rule of the first terminal device.

The communication method provided by the embodiments of the present disclosure may further include: transmitting, by the first terminal device, a sidelink establishment response to the second terminal device, where the sidelink establishment response carries the first transmission rate parameter. According to the first transmission rate parameter, the application traffic of the second terminal device may not exceed a rate indicated by the first transmission rate parameter, during the data transmission.

### Embodiment 1:

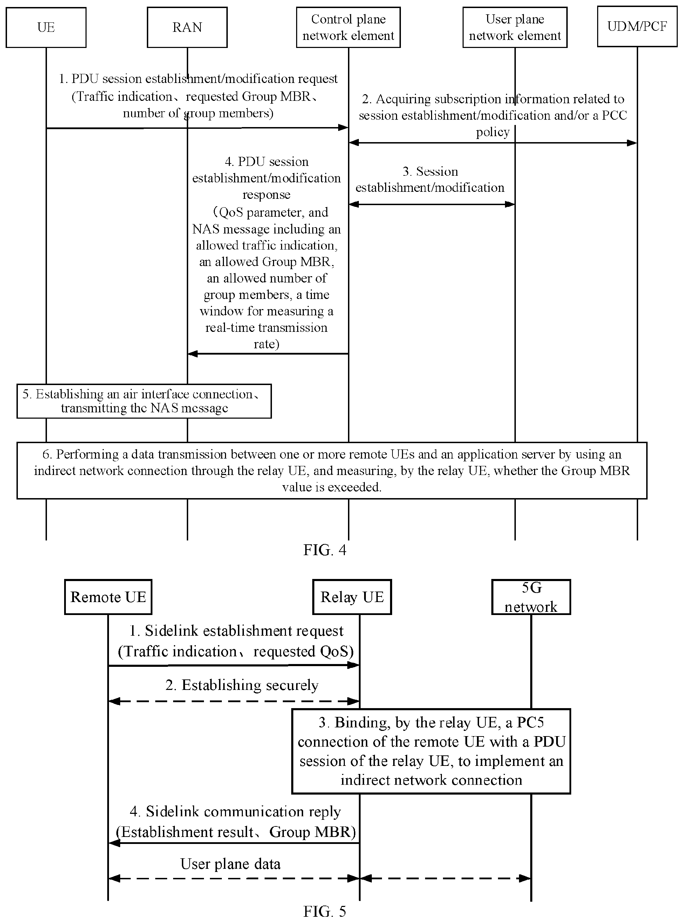

This embodiment takes the first transmission rate parameter being a Group-MBR as an example, to introduce a process of negotiating the first transmission rate parameter during the relay UE establishing a PDU session. FIG. 4 is an implementation flowchart of Embodiment 1 of the present disclosure, including the following content.

Step 1, a UE initiates a PDU session establishment/modification request to a communication network. The UE is the subsequent relay UE and may serve one or more remote UEs. Therefore, the PDU session establishment/modification request of the UE includes one or more of the following parameters.
- Traffic indication, used for indicating that the terminal participates in a specific group traffic (such as a certain FL service), and also used for indicating which group traffic it participates in. The indication may be an RSC, or a parameter associated with or mapped with the PSC, or an application identifier or a traffic identifier.
- Requested Group MBR value, used for indicating the real-time maximum transmission rate that the relay UE may provide for all remote UEs served by the relay UE, which may be defined for uplink and downlink respectively. The Group MBR value herein is the real-time maximum transmission rate requested by the relay UE to the network side.
- Number of group members, that is, the maximum number of the remote UEs served by the UE as a relay UE, requested by the UE, which may be specified for a specific traffic or group.

Step 2, a control plane network element (such as an SMF) of a core network may acquire user subscription information related to session management from a unified data management (UDM) function or a unified data repository (UDR) function, or acquire a policy and charging control (PCC) rule from a policy control function (PCF); the user subscription information or PCC rule includes a traffic identifier, a Group MBR value and/or an upper limit value of the number of group members, and may further include a relevant QoS parameter and indication of the QoS flow for serving the remote UE (i.e., used for transmitting indirect network connection data).

Step 3, the control plane network element (such as the SMF) interacts with a user plane network element (such as a user plane function (UPF)), to perform a PDU session establishment/modification process.

Step 4-5:
the control plane network element replies to the relay UE with a PDU session establishment/modification response, which includes the relevant QoS parameter of the QoS flow for serving the remote UE and a non-access stratum (NAS) message, and the NAS message includes one or more of the following parameters:
an allowed traffic indication, which may be an RSC parameter or an application indication associated with the RSC. If it is the associated application identifier, the association relationship between the RSC and the application identifier may be stored in the control plane network element;
an allowed Group MBR value, used for indicating a real-time maximum transmission rate configured by the network side for the relay UE. The real-time maximum transmission rate is a real-time maximum transmission rate that the relay UE may provide for all remote UEs served by the relay UE. The allowed Group MBR value may be defined for uplink and downlink respectively. According to the allowed Group MBR value, the relay UE may measure the sum of the real-time transmission rates of all remote UEs served by the relay UE (e.g., denoted as Group BR);
a time window for measuring a real-time transmission rate, used for indicating a time window in which the relay UE measures the real-time transmission rates of all remote UEs served by the relay UE. The time window may be represented by a time length. For example, if the time length is 1000ms, the first terminal device measures the real-time transmission rates of all remote UEs served by the first terminal device every 1000ms; and
an allowed number of group members, used for indicating the allowed maximum number of remote UEs in the group served by the remote UE.

Step 6, after the remote UE interacts with the relay UE to establish an indirect network connection, the relay UE performs real-time calculation on data transmissions of all remote UEs participating in the specific traffic to determine whether the Group MBR value is exceeded.

### Embodiment 2:

This embodiment takes the first transmission rate parameter being a Group-MBR as an example, and the PC5 connection between a remote UE and a relay UE is enhanced. FIG. 5 is an implementation flowchart of Embodiment 2 of the present disclosure, including the following content.

Step 1, a remote UE initiates a sidelink establishment request. The sidelink communication request message includes a traffic indication and/or a requested QoS parameter, where the requested QoS parameter is a QoS parameter of an indirect network connection, and the traffic indication is used for indicating which traffic the connection is used for (which may be associated with the RSC).

Step 2, after the relay UE receives the request, if the relay UE has initiated a PDU session establishment with the 5G network and determines that an indirect communication connection may be established for the remote UE, the relay UE may bind the PC5 connection of the remote UE with the PDU session of the relay UE to implement the indirect network connection, for example, to implement the indirect network connection by using the PDU session and the QoS data flow. In this process, the relay UE may make a determination according to a parameter obtained from the remote UE (such as the traffic indication and/or the QoS parameter obtained in Step 1 of this embodiment) and a parameter obtained from the network side (such as the QoS parameter of the QoS flow for serving the remote UE and/or the allowed traffic indication obtained in Step 4 of Embodiment 1). For example, if the value of the QoS parameter requested by the remote UE is less than or equal to the value of the QoS parameter of the QoS flow for serving the remote UE, and the traffic requested by the remote UE is consistent with the traffic supported by the relay UE, the sidelink may be established for the remote UE.

Step 3, after the relay UE receives the request, if a PDU session has not been established, a PDU session establishment or modification request process may be initiated (such as using the process of the above-mentioned Embodiment 1 to establish or modify the PDU session), and then, the relay UE bind the PC5 connection of the remote UE with the established or modified PDU session to implement the indirect network connection; if the relay UE has established the PDU session before receiving the request, the relay UE may directly bind the PC5 connection of the remote UE with the PDU session to implement the indirect network connection.

Step 4, the relay UE transmits a sidelink communication reply message to the remote UE, and informs the establishment result and/or the Group MBR value to the remote UE. The Group MBR value may be used so that the application traffic of the remote UE does not exceed the maximum rate of the Group MBR during the data transmission.

### Embodiment 3:

This embodiment introduces an example in which a relay UE negotiates the Group-MBR in the process of establishing a PDU session and establishes an indirect network connection for a remote UE. In this embodiment, the relay UE first establishes a PDU session, then receives a sidelink establishment request from the remote UE, and then binds the PC5 connection of the remote UE with the PDU session of the relay UE, to implement an indirect network connection of the remote UE.

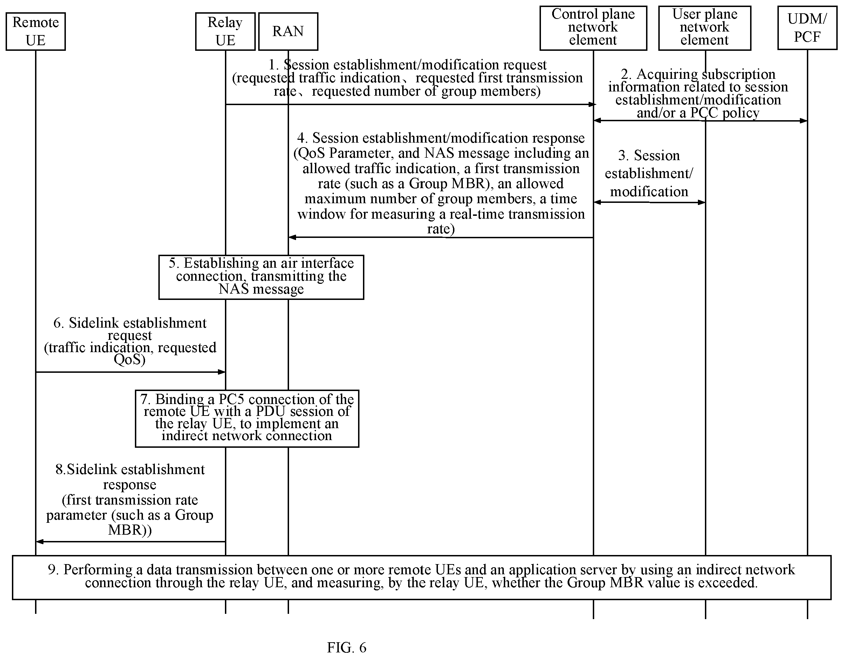

FIG. 6 is an implementation flowchart of Embodiment 3 of the present disclosure, including the following content.

Step 1, the relay UE transmits a session establishment/modification request to a control plane network element (such as an SMF), and the session establishment/modification request carries at least one of:
a first transmission rate requested by the first terminal device;
a traffic indication requested by the first terminal device; and
a requested maximum number of group members.

Step 2, the control plane network element (such as the SMF) acquires subscription information related to the session establishment/modification / a PCC policy from a UDM (or UDR) / a PCF.

Step 3, the control plane network element (such as the SMF) interacts with a user plane network element (such as a UPF), to perform a PDU session establishment/modification process.

Steps 4-5, the control plane network element (such as the SMF) determines at least one of a first transmission rate parameter (such as the Group-MBR), an allowed traffic indication and an allowed maximum number of group members, according to the subscription information / the PCC policy, and at least one of the first transmission rate requested by the first terminal device, the traffic indication requested by the first terminal device and the requested maximum number of group members. The control plane network element (such as the SMF) transmits a session establishment/modification response to the first terminal device, which includes a relevant QoS parameter of the QoS flow for serving the remote UE and an NAS message. The NAS message includes one or more of the following parameters:
a first transmission rate parameter (such as a Group-MBR);
an allowed traffic indication;
an allowed maximum number of group members;
a time window for measuring a real-time transmission rate.

Step 6, the remote UE initiates a sidelink establishment request. The sidelink communication request message includes a traffic indication and/or a requested QoS, where the requested QoS is a QoS of the indirect network connection, and the traffic indication is used for indicating which traffic the connection is used for (which may be associated with the RSC).

Step 7, after the relay UE receives the request, if the relay UE determines that an indirect communication connection may be established for the remote UE, the relay UE may bind the PC5 connection of the remote UE with the PDU session of the relay UE to implement the indirect network connection. In this process, the relay UE may make a determination according to a parameter obtained from the remote UE (such as the traffic indication and/or the QoS parameter obtained from the remote UE) and a parameter obtained from the network side (such as the QoS parameter of the QoS flow for serving the remote UE and/or the allowed traffic indication obtained in Step 4-5). For example, if the value of the QoS parameter requested by the remote UE is less than or equal to the value of the QoS parameter of the QoS flow for serving the remote UE, and the traffic requested by the remote UE is consistent with the traffic supported by the relay UE, the sidelink may be established for the remote UE.

Step 8, the relay UE transmits a sidelink establishment response to the remote UE. The sidelink establishment response may carry the first transmission rate parameter (such as the Group-MBR).

Step 9, when the data transmission is performed between one or more remote UEs and the application server by using the indirect network connection through the relay UE, the relay UE measures whether a sum of real-time transmission rates of the remote UEs in the group served by the relay UE exceeds the value of the first transmission rate parameter (such as the Group-MBR).

### Embodiment 4:

This embodiment introduces an example in which a relay UE negotiates the Group-MBR in the process of establishing a PDU session and establishes an indirect network connection for a remote UE. In this embodiment, the relay UE first receives a sidelink establishment request from the remote UE, then establishes a PDU session, and binds the PC5 connection of the remote UE with the PDU session of the relay UE, to implement an indirect network connection of the remote UE.

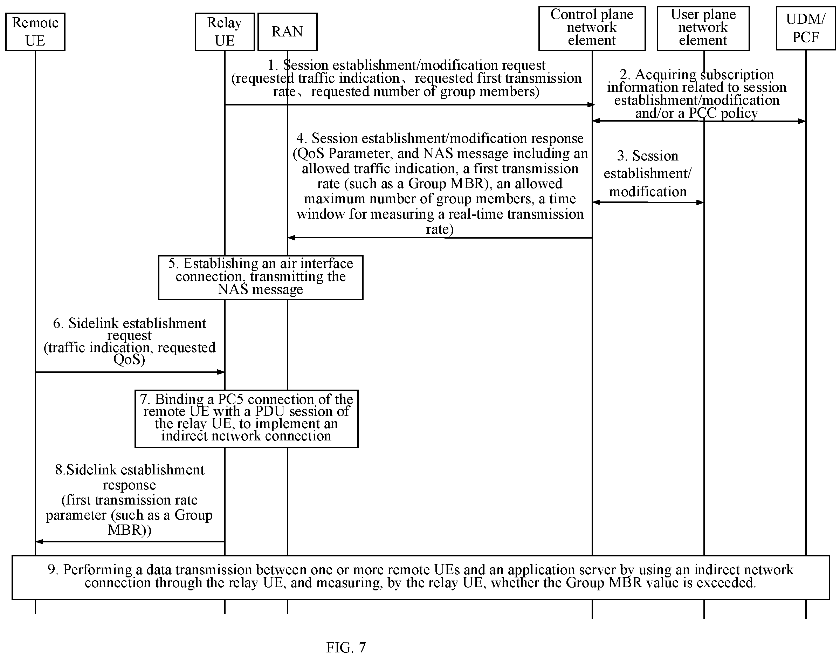

FIG. 7 is an implementation flowchart of Embodiment 4 of the present disclosure, including the following content.

Step 1, the remote UE initiates a sidelink establishment request. The sidelink communication request message includes a traffic indication and/or a requested QoS, where the requested QoS is a QoS of the indirect network connection, and the traffic indication is used for indicating which traffic the connection is used for (which may be associated with the RSC).

Step 2, the relay UE transmits a session establishment/modification request to a control plane network element (such as an SMF), and the session establishment/modification request carries at least one of:
a first transmission rate requested by the first terminal device;
a traffic indication requested by the first terminal device; and
a requested maximum number of group members.

Step 3, the control plane network element (such as the SMF) acquires subscription information related to the session establishment/modification / a PCC policy from a UDM (or UDR) / a PCF.

Step 4, the control plane network element (such as the SMF) interacts with a user plane network element (such as a UPF), to perform a PDU session establishment/modification process.

Steps 5-6, the control plane network element (such as the SMF) determines at least one of a first transmission rate parameter (such as the Group-MBR), an allowed traffic indication and an allowed maximum number of group members, according to the subscription information / the PCC policy, and at least one of the first transmission rate requested by the first terminal device, the traffic indication requested by the first terminal device and the requested maximum number of group members. The control plane network element (such as the SMF) transmits a session establishment/modification response to the first terminal device, which includes a relevant QoS parameter of the QoS flow for serving the remote UE and an NAS message. The NAS message includes one or more of the following parameters:
a first transmission rate parameter (such as a Group-MBR);
an allowed traffic indication;
an allowed maximum number of group members;
a time window for measuring a real-time transmission rate.

Step 7, the relay UE determines whether the indirect network connection may be established for the remote UE, according to a parameter obtained from the remote UE (such as the traffic indication and/or the QoS parameter obtained from the remote UE in Step 1) and a parameter obtained from the network side (such as the QoS parameter of the QoS flow for serving the remote UE and/or the traffic indication obtained in Step 5-6). For example, if the value of the QoS parameter requested by the remote UE is less than or equal to the value of the QoS parameter of the QoS flow for serving the remote UE, and the traffic requested by the remote UE is consistent with the traffic supported by the relay UE, the sidelink may be established for the remote UE.

Step 8, the relay UE transmits a sidelink establishment response to the remote UE. The sidelink establishment response may carry the first transmission rate parameter (such as the Group-MBR).

Step 9, when the data transmission is performed between one or more remote UEs and the application server by using the indirect network connection through the relay UE, the relay UE measures whether a sum of real-time transmission rates of the remote UEs in the group served by the relay UE exceeds the value of the first transmission rate parameter (such as the Group-MBR).

As can be seen from the above embodiments, the embodiments of the present disclosure may make full use of the relay mechanism and use the existing processes and architectures of 5GS to enable the relay UE to measure the real-time transmission rates of one or more relay UEs in the group it serves. By measuring the real-time transmission rate of the relay UE in the group, the actual rate management and control may be performed on the group traffic composed of a plurality of UEs, which helps to prevent network resources from being occupied too much by a certain group traffic and avoid affecting the normal use of other traffics.

In the above embodiments, it is taken as an example in which the relay UE negotiates the Group-MBR with the network side. In the embodiments of the present disclosure, the relay UE may also negotiate an aggregated GBR with the network side; that is, when the relay UE establishes an indirect network connection for one or more remote UEs, a sum of the GBRs allocated to the one or more remote UEs does not exceed the amount of an aggregated GBR. The negotiation process of the amount of the aggregated GBR may refer to the negotiation process of the Group MBR in the aforementioned embodiments, which will not be repeated here. It should be noted that the above embodiments are introduced by taking the communication system being the 5G system as an example, but the embodiments of the present disclosure are not limited to the 5G communication system, and are also applied to other communication systems such as 6G. When applied to other communication systems, the negotiation process of the first transmission rate parameter and the measurement and the measurement (i.e., control method) of the real-time transmission rates within the group by using the first transmission rate parameter may refer to the introduction of the above embodiments, which will not be repeated here.

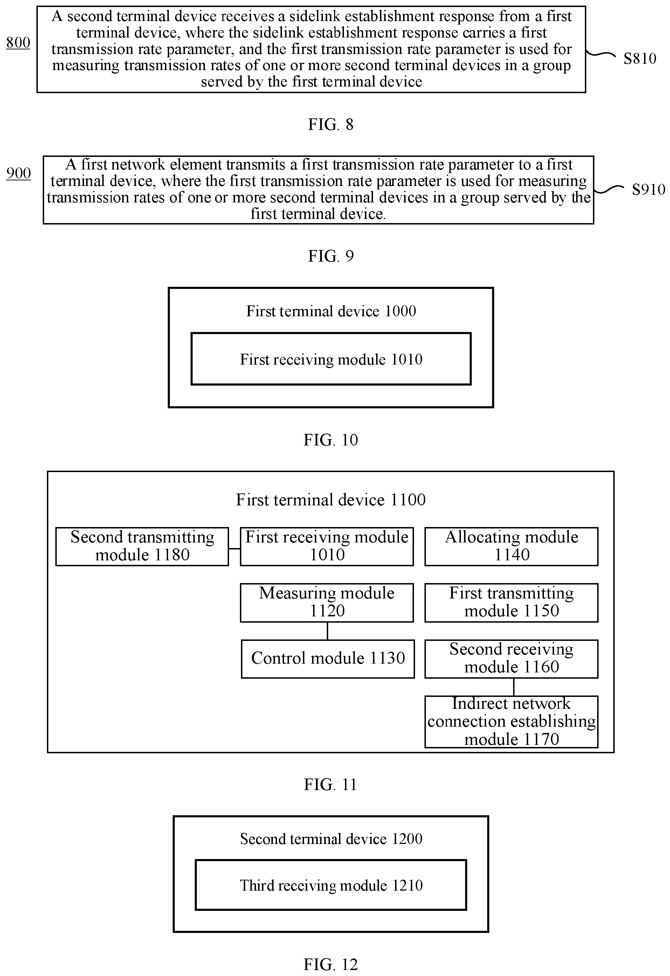

The embodiments of the present disclosure further propose a communication method. FIG. 8 is a schematic flowchart of a communication method 800 in accordance with the embodiments of the present disclosure. The method may be applied to the system illustrated in FIG. 1 or FIG. 2, but is not limited thereto. The method includes at least part of the following content.

S810, a second terminal device receives a sidelink establishment response from a first terminal device, where the sidelink establishment response carries a first transmission rate parameter, and the first transmission rate parameter is used for measuring transmission rates of one or more second terminal devices in a group served by the first terminal device.

The first terminal device may include a relay UE, and the second terminal device may include a remote UE.

In some implementations, the first transmission rate parameter includes an uplink transmission rate parameter and/or a downlink transmission rate parameter; where,
the uplink transmission rate parameter is used for measuring uplink transmission rates of the one or more second terminal devices in the group;
the downlink transmission rate parameter is used for measuring downlink transmission rates of the one or more second terminal devices in the group.

In some embodiments, the first transmission rate parameter includes a group MBR or an aggregate GBR.

In some implementations, the communication method further includes: transmitting, by the second terminal device, a sidelink establishment request to the first terminal device, where the sidelink establishment request carries at least one of:
a QoS requested by the second terminal device; and
a traffic indication requested by the second terminal device.

In some implementations, the traffic indication is represented by at least one of an RSC, a parameter associated with and/or mapped with the RSC, an application identifier and a traffic identifier.

It should be understood that the above and other operations and/or functions of the modules in the communication device in accordance with the embodiments of the present disclosure are respectively for implementing the corresponding processes of the second terminal device in the method 300 of FIG. 3, which will not be repeated here for the sake of brevity.

The embodiments of the present disclosure further propose a communication method. FIG. 9 is a schematic flowchart of a communication method 900 in accordance with the embodiments of the present disclosure. The method may be applied to the system illustrated in FIG. 1 or FIG. 2, but is not limited thereto. The method includes at least part of the following content.

S910, a first network element transmits a first transmission rate parameter to a first terminal device, where the first transmission rate parameter is used for measuring transmission rates of one or more second terminal devices in a group served by the first terminal device.

The first network element may include a control plane network element (such as an SMF), and a second network element may include a UDM, a UDR or a PCF. The first terminal device may include a relay UE, and the second terminal device may include a remote UE.

In some implementations, the first transmission rate parameter includes an uplink transmission rate parameter and/or a downlink transmission rate parameter; where,
the uplink transmission rate parameter is used for measuring uplink transmission rates of the one or more second terminal devices in the group;
the downlink transmission rate parameter is used for measuring downlink transmission rates of the one or more second terminal devices in the group.

In some embodiments, the first transmission rate parameter includes a group MBR or an aggregate GBR.

In some implementations, transmitting, by the first network element, the first transmission rate parameter to the first terminal device, includes: transmitting, by the first network element, a session establishment/modification response to the first terminal device, where the session establishment/modification response carries the first transmission rate parameter.

In some implementations, the session establishment/modification response further carries at least one of:
an allowed traffic indication;
an allowed maximum number of group members; and
a time window for measuring a real-time transmission rate.

In some implementations, the method further includes: receiving, by the first network element, a session establishment/modification request from the first terminal device, where the session establishment/modification request carries at least one of:
a first transmission rate requested by the first terminal device;
a traffic indication requested by the first terminal device; and
a requested maximum number of group members.

In some implementations, the method further includes: acquiring, by the first network element, subscription information of the first terminal device from a second network element;
determining, by the first network element, at least one of the first transmission rate parameter, an allowed traffic indication and an allowed maximum number of group members, according to the subscription information, and at least one of the first transmission rate requested by the first terminal device, the traffic indication requested by the first terminal device and the requested maximum number of group members.

It should be understood that the above and other operations and/or functions of the modules in the communication device in accordance with the embodiments of the present disclosure are respectively for implementing the corresponding processes of the first network element in the method 300 of FIG. 3, which will not be repeated here for the sake of brevity.

The embodiments of the present disclosure further provide a first terminal device. FIG. 10 is a structural schematic diagram of a first terminal device 1000 in accordance with the embodiments of the present disclosure, including:
a first receiving module 1010, configured to receive a first transmission rate parameter, where the first transmission rate parameter is used for measuring transmission rates of one or more second terminal devices in a group served by the first terminal device.

In some implementations, the first transmission rate parameter includes an uplink transmission rate parameter and/or a downlink transmission rate parameter; where the uplink transmission rate parameter is used for measuring uplink transmission rates of the one or more second terminal devices in the group;
the downlink transmission rate parameter is used for measuring downlink transmission rates of the one or more second terminal devices in the group.

In some implementations, the first transmission rate parameter includes a group MBR.

FIG. 11 is a structural schematic diagram of a first terminal device 1100 in accordance with the embodiments of the present disclosure. The first terminal device 1100 includes one or more features of the embodiments of the above first terminal device 1000. In a possible implementation, in the embodiments of the present disclosure, the first terminal device further includes:
a measuring module 1120, configured to measure a sum of real-time transmission rates of respective second terminal devices in the group.

In some implementations, the measurement module 1120 is configured to measure a sum of real-time transmission rates of data transmissions performed by the one or more second terminal devices in the group through a first connection, where the first connection includes a connection corresponding to a guaranteed GBR.

In some implementations, the measurement module 1120 is configured to measure a sum of real-time transmission rates of data transmissions performed by the one or more second terminal devices in the group through a second connection, where the second connection includes a connection corresponding to a non-GBR.

In some embodiments, the measurement module 1120 is configured to measure a sum of real-time transmission rates of data transmissions performed by the one or more second terminal devices in the group through a first connection and a second connection, where the first connection includes a connection corresponding to a GBR and the second connection includes a connection corresponding to a non-GBR.

In some implementations, the first terminal device further includes:
a control module 1130, configured to control a real-time transmission rate of a second terminal device in the group by the first terminal device, in a case where the sum of the real-time transmission rates of the one or more second terminal devices in the group measured by the first terminal device is greater than the group MBR.

In some implementations, a sum of GBRs of second terminal devices in the group is greater than, equal to or less than the group MBR.

In some embodiments, the first transmission rate parameter includes an aggregate guaranteed GBR.

In some implementations, the first terminal device further includes:
an allocating module 1140, configured to allocate GBRs to connections of respective second terminal devices in the group, so that a sum of GBRs of connections of the second terminal devices in the group is not greater than the Aggregated GBR.

In some implementations, the connections of the second terminal devices include a sidelink connection or an indirect network connection.

In some implementations, the first receiving module 1010 is configured to:
receive a session establishment/modification response from a first network element, where the session establishment/modification response carries the first transmission rate parameter.

In some implementations, the session establishment/modification response further carries at least one of:
an allowed traffic indication;
an allowed maximum number of group members; and
a time window for measuring a real-time transmission rate.

In some implementations, the first terminal device further includes:
a first transmitting module 1150, configured to transmit a session establishment/modification request to the first network element, where the session establishment/modification request carries at least one of:
a first transmission rate requested by the first terminal device;
a traffic indication requested by the first terminal device; and
a requested maximum number of group members.

In some implementations, the first terminal device further includes:
a second receiving module 1160, configured to receive a sidelink establishment request from a second terminal device, where the sidelink establishment request carries at least one of:
a QoS requested by the second terminal device; and
a traffic indication requested by the second terminal device.

In some implementations, the first terminal device further includes:
an indirect network connection establishing module 1170, configured to establish an indirect network connection for the second terminal device according to at least one of the QoS requested by the second terminal device, the traffic indication requested by the second terminal device, the first transmission rate parameter and an allowed traffic indication.

In some implementations, the first terminal device further includes:
a second transmitting module 1180, configured to transmit a sidelink establishment response to the second terminal device, where the sidelink establishment response carries the first transmission rate parameter.

In some implementations, the traffic indication is represented by at least one of an RSC, a parameter associated with and/or mapped with the RSC, an application identifier, and a traffic identifier.

In some implementations, the first terminal device includes a relay UE.

In some implementations, the second terminal device includes a remote UE.

In some implementations, the first network element includes an SMF.

It should be understood that the above and other operations and/or functions of the modules in the first network device in accordance with the embodiments of the present disclosure are respectively for implementing the corresponding process of the first terminal device in the method 300 of FIG. 3, which will not be repeated here for the sake of brevity.

The embodiments of the present disclosure further provide a second terminal device. FIG. 12 is a structural schematic diagram of a second terminal device 1200 in accordance with the embodiments of the present disclosure, including:
a third receiving module 1210, configured to receive a sidelink establishment response from a first terminal device, where the sidelink establishment response carries a first transmission rate parameter, and the first transmission rate parameter is used for measuring transmission rates of one or more second terminal devices in a group served by the first terminal device.

In some implementations, the first transmission rate parameter includes an uplink transmission rate parameter and/or a downlink transmission rate parameter; where,
the uplink transmission rate parameter is used for measuring uplink transmission rates of the one or more second terminal devices in the group;
the downlink transmission rate parameter is used for measuring downlink transmission rates of the one or more second terminal devices in the group.

In some implementations, the first transmission rate parameter includes a group MBR or an aggregate GBR.

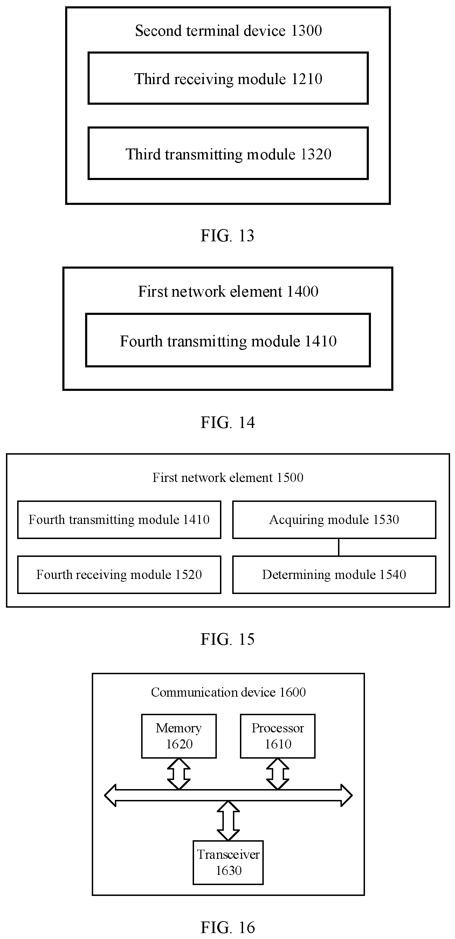

FIG. 13 is a structural schematic diagram of a second terminal device 1300 in accordance with the embodiments of the present disclosure. The second terminal device 1300 includes one or more features of the embodiments of the above second terminal device 1200. In a possible implementation, in the embodiments of the present disclosure, the second terminal device further includes:
a third transmitting module 1320, configured to transmit a sidelink establishment request to the first terminal device, where the sidelink establishment request carries at least one of:
a QoS requested by the second terminal device; and
a traffic indication requested by the second terminal device.

In some implementations, the traffic indication is represented by at least one of an RSC, a parameter associated with and/or mapped with the RSC, an application identifier and a traffic identifier.

In some implementations, the first terminal device includes a relay UE.

In some implementations, the second terminal device includes a remote UE.

It should be understood that the above and other operations and/or functions of the modules in the first network device in accordance with the embodiments of the present disclosure are respectively for implementing the corresponding process of the second terminal device in the method 800 of FIG. 8, which will not be repeated here for the sake of brevity.

The embodiments of the present disclosure further provide a first network element. FIG. 14 is a structural schematic diagram of a first network element 1400 in accordance with the embodiments of the present disclosure, including:
a fourth transmitting module 1410, configured to transmit a first transmission rate parameter to a first terminal device, where the first transmission rate parameter is used for measuring transmission rates of one or more second terminal devices in a group served by the first terminal device.

In some implementations, the first transmission rate parameter includes an uplink transmission rate parameter and/or a downlink transmission rate parameter; where,
the uplink transmission rate parameter is used for measuring uplink transmission rates of the one or more second terminal devices in the group;
the downlink transmission rate parameter is used for measuring downlink transmission rates of the one or more second terminal devices in the group.

In some implementations, the first transmission rate parameter includes a group MBR or an aggregate GBR.

In some implementations, the fourth transmitting module 1410 is configured to:
transmit a session establishment/modification response to the first terminal device, where the session establishment/modification response carries the first transmission rate parameter.

In some implementations, the session establishment/modification response further carries at least one of:
an allowed traffic indication;
an allowed maximum number of group members; and
a time window for measuring a real-time transmission rate.

FIG. 15 is a structural schematic diagram of a first network element 1500 in accordance with the embodiments of the present disclosure. The first network element 1500 includes one or more features of the embodiments of the above first network element 1400. In a possible implementation, in the embodiments of the present disclosure, the first network element 1500 further includes:
a fourth receiving module 1520, configured to receive a session establishment/modification request from the first terminal device, where the session establishment/modification request carries at least one of:
a first transmission rate requested by the first terminal device;
a traffic indication requested by the first terminal device; and
a requested maximum number of group members.

In some implementations, the first network element further includes:
an acquiring module 1530, configured to acquire subscription information of the first terminal device from a second network element;
a determining module 1540, configured to determine at least one of the first transmission rate parameter, an allowed traffic indication and an allowed maximum number of group members, according to the subscription information, and at least one of the first transmission rate requested by the first terminal device, the traffic indication requested by the first terminal device and the requested maximum number of group members.

In some implementations, the first network element includes an SMF.

In some implementations, the first terminal device includes a relay UE.

In some implementations, the second terminal device includes a remote UE.

In some implementations, the second network element includes a UDM, a UDR, or a PCF.

It should be understood that the above and other operations and/or functions of the modules in the first network element in accordance with the embodiments of the present disclosure are respectively for implementing the corresponding processes of the first network element in the method 900 of FIG. 9, which will not be repeated here for the sake of brevity.

It should be noted that the functions described in the various modules (sub-modules, units or components, etc.) in the communication device in the embodiments of the present disclosure may be implemented by different modules (sub-modules, units or components, etc.), or by a same module (sub-module, unit or component, etc.). For example, the first receiving module and the second receiving module may be different modules or a same module, which both can implement the corresponding functions thereof in the embodiments of the present disclosure. In addition, the transmitting module and the receiving module in the embodiments of the present disclosure may be implemented by a transceiver of the device, and some or all of the remaining modules may be implemented by a processor of the device.

FIG. 16 is a structural schematic diagram of a communication device 1600 in accordance with the embodiments of the present disclosure. The communication device 1600 shown in FIG. 16 includes a processor 1610, and the processor 1610 may call and run a computer program from a memory to implement the method in the embodiments of the present disclosure.

In some implementations, as shown in FIG. 25, the communication device 1600 may further include a memory 1620. The processor 1610 may call and run a computer program from the memory 1620, to implement the communication device in the embodiments of the present disclosure.

The memory 1620 may be a separate device independent from the processor 1610, or may be integrated into the processor 1610.

In some implementations, as shown in FIG. 16 the communication device 1600 may further include a transceiver 1630. The processor 1610 may control the transceiver 1630 to communicate with other devices, and specifically, to transmit information or data to other devices, or receive information or data transmitted by other devices.

The transceiver 1630 may include a transmitter and a receiver. The transceiver 1630 may further include an antenna (antennas), and the number of antennas may be one or more.

In some implementations, the communication device 1600 may be the communication device of the embodiments of the present disclosure, and the communication device 1600 may implement corresponding procedures implemented by the communication device in the various methods of the embodiments of the present disclosure, which will not be repeated here for the sake of brevity.

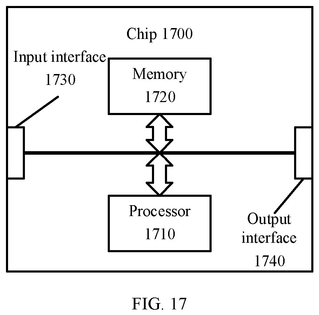

FIG. 17 is a structural schematic diagram of a chip 1700 in accordance with the embodiments of the present disclosure. The chip 1700 illustrated in FIG. 17 includes a processor 1710. The processor 1710 may call a computer program from a memory and run the computer program, to implement the methods in the embodiments of the present disclosure.

In some implementations, as illustrated in FIG. 17, the chip 1700 may further include a memory 1720. The processor 1710 may call a computer program from the memory 1720 and run the computer program, to implement the methods in the embodiments of the present disclosure.

The memory 1720 may be a separate device independent of the processor 1710, or may be integrated into the processor 1710.

In some implementations, the chip 1700 may further include an input interface 1730. The processor 1710 may control the input interface 1730 to communicate with other devices or chips, and specifically, to acquire information or data transmitted by other devices or chips.

In some implementations, the chip 1700 may further include an output interface 1740. The processor 1710 may control the output interface 1740 to communicate with other devices or chips, and specifically, to output information or data to other devices or chips.

In some embodiments, the chip may be applied to the communication device in the embodiments of the present disclosure, and the chip may implement the corresponding processes implemented by the network device in various methods in the embodiments of the present disclosure, which will not be repeated here for the sake of brevity.

It should be understood that the chip mentioned in the embodiments of the present disclosure may also be called a system on chip, a system chip, a chip system or a system-on-chip chip, etc.

The above-mentioned processor may be a general-purpose processor, a digital signal processor (DSP), a field programmable gate array (FPGA), an application specific integrated circuit (ASIC) or other programmable logic devices, transistor logic devices, and discrete hardware components, etc. The above-mentioned general-purpose processor may be a microprocessor or may be any conventional processor, etc.

The above-mentioned memory may be a volatile memory or a non-volatile memory, or may include both the volatile memory and non-volatile memory. The non-volatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM) or a flash memory. The volatile memory may be a random access memory (RAM).

It should be understood that the above-mentioned memory is exemplary but not a limited illustration. For example, the memory in the embodiments of the present disclosure may also be a static random access memory (static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct rambus random access memory (Direct Rambus RAM, DR RAM). It should be noted that the memory of the system and the method described herein is intended to include, but not limited to, these and any other suitable types of memories.

The above embodiments may be implemented in whole or in part by software, hardware, firmware, or any combination thereof. When the above embodiments are implemented by using software, they may be implemented in the form of a computer program product in whole or in part. The computer program product includes one or more computer instructions. When computer program instructions are loaded and executed on a computer, processes or functions according to the embodiments of the present disclosure are generated in whole or in part. The computer may be a general-purpose computer, a dedicated computer, a computer network, or any other programmable apparatus. The computer instructions may be stored in a computer-readable storage medium or transmitted from one computer-readable storage medium to another computer-readable storage medium, for example, the computer instructions may be transmitted from a website site, computer, server, or data center to another website site, computer, server, or data center via wired (such as coaxial cable, fiber optic, digital subscriber line (DSL)) or wireless (such as infrared, radio, microwave, etc.) means. The computer-readable storage medium may be any available medium that can be accessed by the computer, or a data storage device, such as including a server or a data center that integrates one or more available mediums. The available medium may be a magnetic medium (e.g., a floppy disk, a hard disk or a magnetic tape), an optical medium (e.g., a digital video disk (DVD)) or a semiconductor medium (e.g., a solid state disk (SSD)), etc.

It should be understood that, in the various embodiments of the present disclosure, a size of serial numbers of the above processes does not imply an order of execution, and the execution order of the respective processes should be determined by their function and internal logic, but should not constitute any limitation on the implementation processes of the embodiments of the present disclosure.

Those skilled in the art may clearly understand that, for the convenience and brevity of the description, the specific working processes of the systems, apparatus and units described above may refer to the corresponding processes in the above method embodiments, which will not be repeated here.

The above description is only the specific implementation of the present disclosure, but the protection scope of the present disclosure is not limited thereto, and any skilled familiar with this technical field may easily think of changes or substitutions within the technical scope disclosed in the present disclosure, which should be all covered within the protection scope of the present disclosure. Therefore, the protection scope of the present disclosure should be determined based on the protection scope of claims.

## Claims

1. A communication method, comprising:
receiving, by a first terminal device, a first transmission rate parameter, wherein the first transmission rate parameter is used for measuring transmission rates of one or more second terminal devices in a group served by the first terminal device.

2. The method according to claim 1, wherein the first transmission rate parameter comprises an uplink transmission rate parameter and/or a downlink transmission rate parameter; wherein,
the uplink transmission rate parameter is used for measuring uplink transmission rates of the one or more second terminal devices in the group;
the downlink transmission rate parameter is used for measuring downlink transmission rates of the one or more second terminal devices in the group.

3. The method according to claim 1 or 2, wherein the first transmission rate parameter comprises a group maximum bit rate (Group MBR).

4. The method according to claim 3, further comprising:
measuring, by the first terminal device, a sum of real-time transmission rates of the one or more second terminal devices in the group.

5. The method according to claim 4, wherein measuring, by the first terminal device, the sum of the real-time transmission rates of the one or more second terminal devices in the group, comprises:
measuring, by the first terminal device, a sum of real-time transmission rates of data transmissions performed by the one or more second terminal devices in the group through a first connection, wherein the first connection comprises a connection corresponding to a guaranteed bit rate (GBR).

6. The method according to claim 4, wherein measuring, by the first terminal device, the sum of the real-time transmission rates of the one or more second terminal devices in the group, comprises:
measuring, by the first terminal device, a sum of real-time transmission rates of data transmissions performed by the one or more second terminal devices in the group through a second connection, wherein the second connection comprises a connection corresponding to a non-guaranteed bit rate (non-GBR).

7. The method according to claim 4, wherein measuring, by the first terminal device, the sum of the real-time transmission rates of the one or more second terminal devices in the group, comprises:
measuring, by the first terminal device, a sum of real-time transmission rates of data transmissions performed by the one or more second terminal devices in the group through a first connection and a second connection, wherein the first connection comprises a connection corresponding to a GBR and the second connection comprises a connection corresponding to a non-GBR.

8. The method according to any one of claims 4 to 7, further comprising:
controlling, by the first terminal device, a real-time transmission rate of a second terminal device in the group, in a case where the sum of the real-time transmission rates of the one or more second terminal devices in the group measured by the first terminal device is greater than the Group MBR.

9. The method according to any one of claims 3 to 8, wherein a sum of GBRs of second terminal devices in the group is greater than, equal to or less than the Group MBR.

10. The method according to claim 1 or 2, wherein the first transmission rate parameter comprises an aggregate guaranteed bit rate (Aggregated GBR).

11. The method according to claim 10, further comprising:
allocating, by the first terminal device, GBRs to connections of respective second terminal devices in the group, so that a sum of GBRs of connections of the second terminal devices in the group is not greater than the Aggregated GBR.

12. The method according to claim 11, wherein the connections of the second terminal devices comprise a sidelink connection or an indirect network connection.

13. The method according to any one of claims 1 to 12, wherein receiving, by the first terminal device, the first transmission rate parameter, comprises:
receiving, by the first terminal device, a session establishment/modification response from a first network element, wherein the session establishment/modification response carries the first transmission rate parameter.

14. The method according to claim 13, wherein the session establishment/modification response further carries at least one of:
an allowed traffic indication;
an allowed maximum number of group members; and
a time window for measuring a real-time transmission rate.

15. The method according to claim 13 or 14, further comprising:
transmitting, by the first terminal device, a session establishment/modification request to the first network element, wherein the session establishment/modification request carries at least one of:
a first transmission rate requested by the first terminal device;
a traffic indication requested by the first terminal device; and
a requested maximum number of group members.

16. The method according to any one of claims 13 to 15, further comprising:
receiving, by the first terminal device, a sidelink establishment request from a second terminal device, wherein the sidelink establishment request carries at least one of:
a quality of service (QoS) requested by the second terminal device; and
a traffic indication requested by the second terminal device.

17. The method according to claim 16, further comprising,
establishing, by the first terminal device, an indirect network connection for the second terminal device according to at least one of the QoS requested by the second terminal device, the traffic indication requested by the second terminal device, the first transmission rate parameter and an allowed traffic indication.

18. The method according to claim 17, further comprising,
transmitting, by the first terminal device, a sidelink establishment response to the second terminal device, wherein the sidelink establishment response carries the first transmission rate parameter.

19. The method according to any one of claims 14 to 18, wherein the traffic indication is represented by at least one of an RSC, a parameter associated with or mapped with the RSC, an application identifier, and a traffic identifier.

20. The method according to any one of claims 1 to 19, wherein the first terminal device comprises a relay UE.

21. The method according to any one of claims 1 to 20, wherein the second terminal device comprises a remote UE.

22. The method according to any one of claims 13 to 19, wherein the first network element comprises a session management function (SMF).

23. A communication method, comprising:
receiving, by a second terminal device, a sidelink establishment response from a first terminal device, wherein the sidelink establishment response carries a first transmission rate parameter, and the first transmission rate parameter is used for measuring transmission rates of one or more second terminal devices in a group served by the first terminal device.

24. The method according to claim 23, wherein the first transmission rate parameter comprises an uplink transmission rate parameter and/or a downlink transmission rate parameter; wherein,
the uplink transmission rate parameter is used for measuring uplink transmission rates of the one or more second terminal devices in the group;
the downlink transmission rate parameter is used for measuring downlink transmission rates of the one or more second terminal devices in the group.

25. The method according to claim 23 or 24, wherein the first transmission rate parameter comprises a group maximum bit rate (Group MBR) or an aggregate guaranteed bit rate (Aggregated GBR).

26. The method according to any one of claims 23 to 25, further comprising:
transmitting, by the second terminal device, a sidelink establishment request to the first terminal device, wherein the sidelink establishment request carries at least one of:
a QoS requested by the second terminal device; and
a traffic indication requested by the second terminal device.

27. The method according to claim 26, wherein the traffic indication is represented by at least one of an RSC, a parameter associated with or mapped with the RSC, an application identifier and a traffic identifier.

28. The method according to any one of claims 23 to 27, wherein the first terminal device comprises a relay UE.

29. The method according to any one of claims 23 to 28, wherein the second terminal device comprises a remote UE.

30. A communication method, comprising:
transmitting, by a first network element, a first transmission rate parameter to a first terminal device, wherein the first transmission rate parameter is used for measuring transmission rates of one or more second terminal devices in a group served by the first terminal device.

31. The method according to claim 30, wherein the first transmission rate parameter comprises an uplink transmission rate parameter and/or a downlink transmission rate parameter; wherein,
the uplink transmission rate parameter is used for measuring uplink transmission rates of the one or more second terminal devices in the group;
the downlink transmission rate parameter is used for measuring downlink transmission rates of the one or more second terminal devices in the group.

32. The method according to claim 30 or 31, wherein the first transmission rate parameter comprises a Group MBR or an Aggregated GBR.

33. The method according to any one of claims 30 to 32, wherein transmitting, by the first network element, the first transmission rate parameter to the first terminal device, comprises:
transmitting, by the first network element, a session establishment/modification response to the first terminal device, wherein the session establishment/modification response carries the first transmission rate parameter.

34. The method according to claim 33, wherein the session establishment/modification response further carries at least one of:
an allowed traffic indication;
an allowed maximum number of group members; and
a time window for measuring a real-time transmission rate.

35. The method according to claim 33 or 34, further comprising:
receiving, by the first network element, a session establishment/modification request from the first terminal device, wherein the session establishment/modification request carries at least one of:
a first transmission rate requested by the first terminal device;
a traffic indication requested by the first terminal device; and
a requested maximum number of group members.

36. The method according to claim 35, further comprising:
acquiring, by the first network element, subscription information of the first terminal device from a second network element; and
determining, by the first network element, at least one of the first transmission rate parameter, an allowed traffic indication and an allowed maximum number of group members, according to the subscription information, and at least one of the first transmission rate requested by the first terminal device, the traffic indication requested by the first terminal device and the requested maximum number of group members.

37. The method according to any one of claims 30 to 36, wherein the first network element comprises a session management function (SMF).

38. The method according to any one of claims 30 to 37, wherein the first terminal device comprises a relay UE.

39. The method according to any one of claims 30 to 38, wherein the second terminal device comprises a remote UE.

40. The method according to claim 36, wherein the second network element comprises a unified data management (UDM) function, a unified data repository (UDR) function, or a policy control function (PCF).

41. A first terminal device, comprising:
a first receiving module, configured to receive a first transmission rate parameter, wherein the first transmission rate parameter is used for measuring transmission rates of one or more second terminal devices in a group served by the first terminal device.

42. The first terminal device according to claim 41, wherein the first transmission rate parameter comprises an uplink transmission rate parameter and/or a downlink transmission rate parameter; wherein,
the uplink transmission rate parameter is used for measuring uplink transmission rates of the one or more second terminal devices in the group;
the downlink transmission rate parameter is used for measuring downlink transmission rates of the one or more second terminal devices in the group.

43. The first terminal device according to claim 41 or 42, wherein the first transmission rate parameter comprises a group maximum bit rate (Group MBR).

44. The first terminal device according to claim 43, further comprising:
a measuring module, configured to measure a sum of real-time transmission rates of respective second terminal devices in the group.

45. The first terminal device according to claim 44, wherein the measurement module is configured to measure a sum of real-time transmission rates of data transmissions performed by the one or more second terminal devices in the group through a first connection, wherein the first connection comprises a connection corresponding to a guaranteed bit rate (GBR).

46. The first terminal device according to claim 44, wherein the measurement module is configured to measure a sum of real-time transmission rates of data transmissions performed by the one or more second terminal devices in the group through a second connection, wherein the second connection comprises a connection corresponding to a non-guaranteed bit rate (non-GBR).

47. The first terminal device according to claim 44, wherein the measurement module is configured to measure a sum of real-time transmission rates of data transmissions performed by the one or more second terminal devices in the group through a first connection and a second connection, wherein the first connection comprises a connection corresponding to a GBR and the second connection comprises a connection corresponding to a non-GBR.

48. The first terminal device according to any one of claims 44 to 47, further comprising:
a control module, configured to control a real-time transmission rate of a second terminal device in the group by the first terminal device, in a case where the sum of the real-time transmission rates of the one or more second terminal devices in the group measured by the first terminal device is greater than the Group MBR.

49. The first terminal device according to any one of claims 43 to 48, wherein a sum of GBRs of second terminal devices in the group is greater than, equal to or less than the Group MBR.

50. The first terminal device according to claim 41 or 42, wherein the first transmission rate parameter comprises an Aggregated GBR.

51. The first terminal device according to claim 50, further comprising:
an allocating module, configured to allocate GBRs to connections of respective second terminal devices in the group, so that a sum of GBRs of connections of the second terminal devices in the group is not greater than the Aggregated GBR.

52. The first terminal device of claim 51, wherein the connections of the second terminal devices comprise a sidelink connection or an indirect network connection.

53. The first terminal device according to any one of claims 41 to 52, wherein the first receiving module is configured to:
receive a session establishment/modification response from a first network element, wherein the session establishment/modification response carries the first transmission rate parameter.

54. The first terminal device according to claim 53, wherein the session establishment/modification response further carries at least one of:
an allowed traffic indication;
an allowed maximum number of group members; and
a time window for measuring a real-time transmission rate.

55. The first terminal device according to claim 53 or 54, further comprising:
a first transmitting module, configured to transmit a session establishment/modification request to the first network element, wherein the session establishment/modification request carries at least one of:
a first transmission rate requested by the first terminal device;
a traffic indication requested by the first terminal device; and
a requested maximum number of group members.

56. The first terminal device according to any one of claims 53 to 55, further comprising:
a second receiving module, configured to receive a sidelink establishment request from a second terminal device, wherein the sidelink establishment request carries at least one of:
a quality of service (QoS) requested by the second terminal device; and
a traffic indication requested by the second terminal device.

57. The first terminal device according to claim 56, further comprising:
an indirect network connection establishing module, configured to establish an indirect network connection for the second terminal device according to at least one of the QoS requested by the second terminal device, the traffic indication requested by the second terminal device, the first transmission rate parameter and an allowed traffic indication.

58. The first terminal device according to claim 57, further comprising:
a second transmitting module, configured to transmit a sidelink establishment response to the second terminal device, wherein the sidelink establishment response carries the first transmission rate parameter.

59. The first terminal device according to any one of claims 54 to 58, wherein the traffic indication is represented by at least one of an RSC, a parameter associated with or mapped with the RSC, an application identifier, and a traffic identifier.

60. The first terminal device according to any one of claims 41 to 59, wherein the first terminal device comprises a relay UE.

61. The first terminal device according to any one of claims 41 to 60, wherein the second terminal device comprises a remote UE.

62. The first terminal device according to any one of claims 53 to 59, wherein the first network element comprises a session management function (SMF).

63. A second terminal device, comprising:
a third receiving module, configured to receive a sidelink establishment response from a first terminal device, wherein the sidelink establishment response carries a first transmission rate parameter, and the first transmission rate parameter is used for measuring transmission rates of one or more second terminal devices in a group served by the first terminal device.

64. The second terminal device according to claim 63, wherein the first transmission rate parameter comprises an uplink transmission rate parameter and/or a downlink transmission rate parameter; wherein,
the uplink transmission rate parameter is used for measuring uplink transmission rates of the one or more second terminal devices in the group;
the downlink transmission rate parameter is used for measuring downlink transmission rates of the one or more second terminal devices in the group.

65. The second terminal device according to claim 63 or 64, wherein the first transmission rate parameter comprises a Group MBR or an Aggregated GBR.

66. The second terminal device according to any one of claims 63 to 65, further comprising:
a third transmitting module, configured to transmit a sidelink establishment request to the first terminal device, wherein the sidelink establishment request carries at least one of:
a QoS requested by the second terminal device; and
a traffic indication requested by the second terminal device.

67. The second terminal device according to claim 66, wherein the traffic indication is represented by at least one of an RSC, a parameter associated with or mapped with the RSC, an application identifier and a traffic identifier.

68. The second terminal device according to any one of claims 63 to 67, wherein the first terminal device comprises a relay UE.

69. The second terminal device according to any one of claims 63-68, wherein the second terminal device comprises a remote UE.

70. A first network element, comprising:
a fourth transmitting module, configured to transmit a first transmission rate parameter to a first terminal device, wherein the first transmission rate parameter is used for measuring transmission rates of one or more second terminal devices in a group served by the first terminal device.

71. The first network element according to claim 70, wherein the first transmission rate parameter comprises an uplink transmission rate parameter and/or a downlink transmission rate parameter; wherein,
the uplink transmission rate parameter is used for measuring uplink transmission rates of the one or more second terminal devices in the group;
the downlink transmission rate parameter is used for measuring downlink transmission rates of the one or more second terminal devices in the group.

72. The first network element according to claim 70 or 71, wherein the first transmission rate parameter comprises a Group MBR or an Aggregated GBR.

73. The first network element according to any one of claims 70 to 72, wherein the fourth transmitting module is configured to:
transmit a session establishment/modification response to the first terminal device, wherein the session establishment/modification response carries the first transmission rate parameter.

74. The first network element according to claim 73, wherein the session establishment/modification response further carries at least one of:
an allowed traffic indication;
an allowed maximum number of group members; and
a time window for measuring a real-time transmission rate.

75. The first network element according to claim 73 or 74, further comprising:
a fourth receiving module, configured to receive a session establishment/modification request from the first terminal device, wherein the session establishment/modification request carries at least one of:
a first transmission rate requested by the first terminal device;
a traffic indication requested by the first terminal device; and
a requested maximum number of group members.

76. The first network element according to claim 75, further comprising:
an acquiring module, configured to acquire subscription information of the first terminal device from a second network element;
a determining module, configured to determine at least one of the first transmission rate parameter, an allowed traffic indication and an allowed maximum number of group members, according to the subscription information, and at least one of the first transmission rate requested by the first terminal device, the traffic indication requested by the first terminal device and the requested maximum number of group members.

77. The first network element according to any one of claims 70 to 76, wherein the first network element comprises a session management function (SMF).

78. The first network element according to any one of claims 70 to 77, wherein the first terminal device comprises a relay UE.

79. The first network element according to any one of claims 70 to 78, wherein the second terminal device comprises a remote UE.

80. The first network element according to claim 76, wherein the second network element comprises a unified data management (UDM) function, a unified data repository (UDR) function, or a policy control function (PCF).

81. A communication device, comprising: a processor, a memory and a transceiver, wherein the memory is configured to store a computer program, the processor is configured to call and run the computer program stored in the memory, and control the transceiver, to perform the method according to any one of claims 1 to 22, 23 to 29, or 30 to 40.

82. A chip, comprising: a processor configured to call a computer program from a memory and run the computer program, to cause a device equipped with the chip to perform the method according to any one of claims 1 to 22, 23 to 29, or 30 to 40.

83. A computer-readable storage medium, configured to store a computer program, wherein the computer program causes a computer to perform the method according to any one of claims 1 to 22, 23 to 29, or 30 to 40.

84. A computer program product, comprising computer program instructions, wherein the computer program instructions cause a computer to perform the method according to any one of claims 1 to 22, 23 to 29, or 30 to 40.

85. A computer program, wherein the computer program causes a computer to perform the method according to any one of claims 1 to 22, 23 to 29, or 30 to 40.
